# EUROPEAN PATENT SPECIFICATION

(11) **EP 4 336 005 B1**
(45) Date of publication and mention of the grant of the patent: **05.03.2025**
(21) Application number: 22214669.8
(22) Date of filing: 19.12.2022
(51) Int. Cl.: E05B 81/76, E05B 79/06, E05B 85/10, E05B 63/00

(54) **CAR ACCESS ASSEMBLY**
ZUGANGVORRICHTUNG EINES FAHRZEUGS
DISPOSITIF D'ACCÈS DE VOITURE

(30) Priority: 06.09.2022 EP 22194179
(43) Date of publication of application: 13.03.2024
(73) Proprietor: MINEBEA ACCESSSOLUTIONS ITALIA S.P.A., 10044 Pianezza (IT)
(72) Inventor: AKANOU, Myriam, 10044 Pianezza (IT); GUERIN, Anthony, 10044 Pianezza (IT); LABALESTRA, Antonio, 10044 Pianezza (IT); SAVANT, Marco, 10044 Pianezza (IT); ROCCI, Antonio, 10044 Pianezza (IT)
(74) Representative: Germain Maureau

(56) References cited:
- WO-A1-2017/019760
- DE-A1- 102016 123 724
- US-A1- 2014 292 004
- US-A1- 2015 123 409
- US-A1- 2016 123 045

## Description

### Field of the invention

The present invention concerns a car access assembly with an electronic sensing unit for a handle attached on a car door.

### Prior art

It is known to have a car door with a closing system that can be released with a mechanical arrangement built in a handle of the car, e.g. from US 2016 123 045 or DE 10 2016 123 724. Typically, the user seizes the mechanical arrangement located on the handle to trigger it. The user can then in a same move pull the door to open it.

This provision gives satisfaction in that the user is intuitively guided to operate the door because the mechanical arrangement reacts when gripping the handle.

It is also known to use electronic detectors in the automotive industry to facilitate the user command by limiting the force that should be applied to execute a task. Here, it is also known to add a sensing unit to a car door to unlock it for opening.

The use of a sensing unit can however result in a decrease of the user experience quality since the sensing unit could be located in a place that is not intuitive for the user.

The implementation of a sensing unit in a handle could also lead to another opening method that requires practice for the user. For example, it could be necessary to push or touch a button and then pull the door which implies realizing a two different movements in a precise order to open the door.

There is therefore a need for a better integration of the electronic sensing unit in a handle to facilitate the handling by the user.

The present invention aims to solve all or some of the disadvantages mentioned above.

### Summary of the invention

For this purpose, the present invention relates to a car access assembly comprising a car door, a handle mounted on the car door, and an electronic sensing unit for the handle attached on the car door, the electronic sensing unit comprising:
a sensor attached on an external side of a part of the car door extending according to a reference plane,
a fixing mechanism for the sensor, the fixing mechanism comprising a first element and a second element configured to cooperate together; the first element being also configured to cooperate with the part of the car door and the sensor or with the handle; the second element being also configured to cooperate with the handle or with the part of the car door and the sensor so that a constraint applied to the handle is transmitted to the sensor for detection of a command.

This provision enables to have a sensor that is fixed on the external side of the car and in the same time that is biased by a constraint applied to the handle. Given that the sensor cooperates simultaneously with the part of the car door and with the handle, the sensor can measure a constraint and therefore a command from a user pushing or pulling the handle.

According to an aspect of the invention, the external side refers to the side of the part of the car door facing the outside of the car. Preferably, the part comprises an internal side facing the interior of the car.

According to an aspect of the invention, the handle is an outside handle of the car for example on the driver side. By car it is understood every kind of vehicle in the automotive industry including bus, truck, personal vehicles etc.

According to an aspect of the invention, the sensor includes at least one strain gauge, said at least one strain gauge being configured to be deformed when the constraint is applied to the handle.

The second element of the fixing mechanism enables to transmit the constraint applied on the handle so as to deform the at least one strain gauge. It thus appears that when a user push or pulls the handle of the car, it implies the deformation of the at least one strain gauge.

According to an aspect of the invention, the at least one sensor is configured to close and to release a locking mechanism of the car door.

Preferably, when a compressing pressure is applied to the sensor transversally to the reference plane, namely when pushing the car door towards a closed position, a locking command is acquired.

Preferably, when an extending pressure is applied to the sensor transversally to the reference plane, namely when pulling the car door towards an open position, a releasing command is acquired.

In other words, in only one movement, the user can unlock and open the car door or close and lock the car door.

According to an aspect of the invention, the at least one strain gauge may be a full-bridge strain gauge or a half-bridge strain gauge.

According to an aspect of the invention, the handle is an outside handle of the car for example on the driver side. By car it is understood every kind of vehicle in the automotive industry including bus, truck, personal vehicles etc.

According to an aspect of the invention, the sensor comprises a support on which the at least one strain gauge is attached, the support being configured to be attached on the external side or on an intermediate part mounted on the external side, the support extending parallel to the reference plane.

The fact that the support is substantially planar and extending parallel to the reference plane facilitates the insertion of the sensor between the handle and the external side.

According to an aspect of the invention, each sensor comprises two strain gauges mounted on the support. Preferably, the support is constituted of a metal material.

According to an aspect of the invention, the support at least one attaching portion configured to be fixed to the part of the car thanks to a corresponding third element of the fixing mechanism.

According to an aspect of the invention, the at least one attaching portion is an orifice or a slot configured for receiving the corresponding third element which is for example a screw, possibly with mounting ring(s).

Preferably, the support presents two attaching portions, the strain gauges being located between the two attaching portions according to a longitudinal direction of the support.

According to an aspect of the invention, the first element extends according to a main direction that is configured to be transversal to the reference plane when installed, the part of the car door and the support presenting each a through opening for the passage of the first element.

Both openings are aligned so that the first element is able to pass though. According to an aspect of the invention, the first element comprises a head configured to cooperate with an internal surface of the part of the car door opposed to the external side.

According to an aspect of the invention, the opening of the support is located between the two strain gauges according to the longitudinal direction of the support.

According to an aspect of the invention, the first element is a screw.

A screw is an efficient way to secure the support on the external side or on an intermediate part mounted on the external side.

According to an aspect of the invention, the second element presents a form complementary with a recess in the handle so that there is a cooperation by complementarity of form.

The complementarity of form is important as it enables the first element to move together with the handle when a user is pushing or pulling the handle.

According to an aspect of the invention, the second element is a nut.

According to an aspect of the invention, said nut is configured to cooperate with the screw to secure de support on the external side.

According to an aspect of the invention, the electronic sensing unit comprises two distinct sensors and two corresponding fixing mechanisms.

This provision enables to obtain a more accurate signal.

According to an aspect of the invention, the car access assembly comprises an additional fixing element for fixing the handle on the part of the car. Preferably, the additional fixing element is a screw configured to be cooperating with the handle and with the part of the car, said screw presenting an axis deviating from the main direction transversally to the reference plane. In particular, said deviation is 45° more or less 10° or 90° more and less 10°.

According to the invention, the handle comprises a guiding leg extending farther than the internal face of the part of the car door, the guiding leg being configured for guiding a signal transmitting device of the electronic sensing unit connected the sensor.

The guiding leg serves as a protection means for the signal transmitting device connected to the sensor. According to an aspect of the invention, the part of the car presents a notch for the passage of the guiding leg from the external side to a location farther than the internal surface of the part of the car.

According to an aspect of the invention, the guiding leg presents channel(s) for the signal transmitting device guiding.

According to an aspect of the invention, the signal transmitting device comprises electrical wire(s) or flexible printed circuit board(s) configured to transmit a signal from the sensor.

Wires can be shielded or not.

According to an aspect of the invention, the car access system also comprises an electronic control unit, said electronic control unit comprising a connector configured to cooperate with the signal transmitting device, the guiding leg presenting a housing for receiving said electronic control unit.

According to an aspect of the invention, the electronic control unit comprises a rigid printed circuit box configured to track the measures from the sensor. Preferably, the electronic control unit comprises an outlet cable to be connected to the car information management system.

Alternatively, the electronic control unit can comprise an outlet connector, for example accessible from the outside the housing of electronic control unit.

The electronic control unit may comprise a housing realized by potting for protecting the inner components. The outlet connector can be outside of the potting.

The different aspects defined above that are not incompatible can be combined.

### Brief description of the figures

The invention will be better understood with the aid of the detailed description that is set out below with reference to the appended drawing in which:
- figure 1 is a perspective view of a handle and an electronic sensing unit;
- figure 2 is a perspective view of a car door with the handle and the electronic sensing unit;
- figure 3 is a perspective view of the electronic sensing unit and the handle with a guiding leg according to a first variant;
- figure 4 is a perspective view of the electronic sensing unit and the handle with a guiding leg according to a second variant;
- figure 5 is a perspective view of the electronic sensing unit and the handle with a guiding leg according to a third variant;.
- figure 6 is a perspective view of the electronic sensing unit and the handle with a guiding leg according to a fourth variant;
- figure 7 is a perspective view of a car door with the handle; figure 8 is a perspective view of the inward facing part of the handle
- figure 9 is a schematic cross-section view of the handle of figure 8

### Description with reference to the figures

In the following detailed description of the figures defined above, the same elements or the elements that are fulfilling identical functions may retain the same references so as to simplify the understanding of the invention.

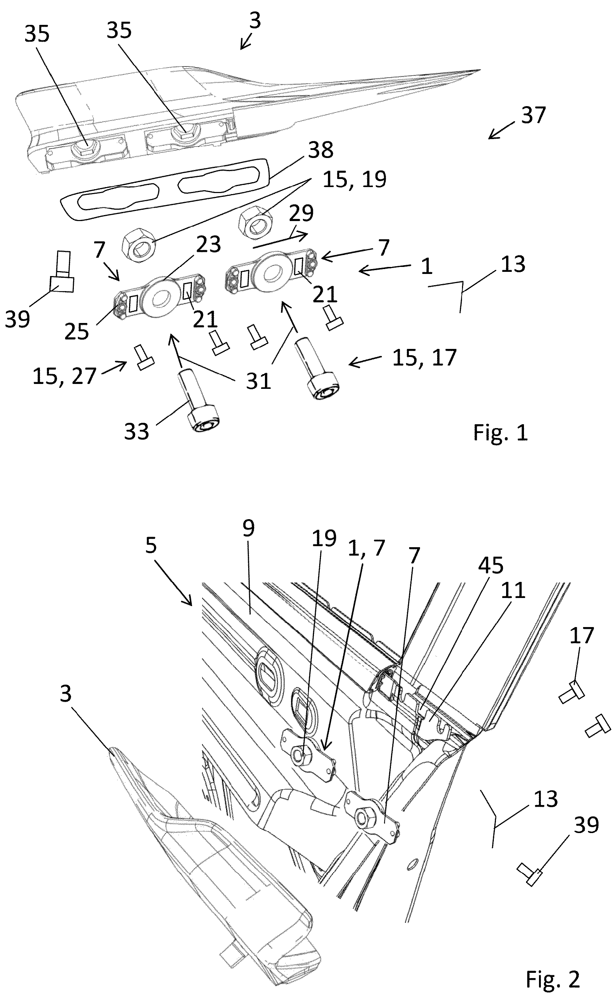

As illustrated in figures 1 and 2, an electronic sensing unit 1 for a handle 3 attached on a car door 5 is depicted.

The electronic sensing unit 1 comprises two sensors 7 attached on an external side 9 of a part 11 of the car door 5 extending according to a reference plane 13.

The electronic sensing unit 1 comprises a fixing mechanism 15 for each sensor 7, the fixing mechanism 15 comprising a first element 17 and a second element 19 configured to cooperate together; the first element 17 being also configured to cooperate with the part 11 of the car door 5 and the sensor 7 or with the handle 3.

The second element 19 is configured to cooperate with the handle 3 or with the part 11 of the car door 5 and the sensor 7 so that a constraint applied to the handle 3 is transmitted to the sensors 7 for detection of a command.

The external side 9 refers to the side of the part 11 of the car door 5 facing the outside of the car. The part 11 comprises an internal side facing the interior of the car.

The handle 3 is an outside handle of the car for example on the driver side. By car it is understood every kind of vehicle in the automotive industry including bus, truck, personal vehicles etc.

Each sensor 7 includes at least one strain gauge 21, said at least one strain gauge 21 being configured to be deformed when the constraint is applied to the handle 3.

The second element 19 of the fixing mechanism 15 enables to transmit the constraint applied on the handle so as to deform the at least one strain gauge 21. It thus appears that when a user push or pulls the handle 3 of the car, it implies the deformation of the at least one strain gauge 21.

Each sensor 7 is configured to close and to release a locking mechanism of the car door 5.

When a compressing pressure is applied to the sensors 7 transversally to the reference plane 13, namely when pushing the car door 5 towards a closed position, a locking command is acquired.

When an extending pressure is applied to the sensor transversally to the reference plane 13, namely when pulling the car door towards an open position, a releasing command is acquired.

In other words, in only one movement, the user can unlock and open the car door 5 or close and lock the car door 5.

The at least one strain gauge 21 may be a full-bridge strain gauge or a half-bridge strain gauge.

The handle 3 is an outside handle of the car for example on the driver side. By car it is understood every kind of vehicle in the automotive industry including bus, truck, personal vehicles etc.

Each sensor 7 comprises a support 23 on which the at least one strain gauge 21 is attached, the support 23 being configured to be attached on the external side 9 or on an intermediate part mounted on the external side 9, the support 23 extending parallel to the reference plane 13.

The fact that the support 23 is substantially planar and extending parallel to the reference plane 13 facilitates the insertion of the sensors 7 between the handle 3 and the external side 9.

Each sensor 7 comprises two strain gauges 21 mounted on the support 23. Preferably, the support 23 is constituted of a metal material.

The support 23 presents at least one attaching portion 25 configured to be fixed to the part 11 of the car thanks to a corresponding third element 27 of the fixing mechanism 15.

The at least one attaching portion 25 is an orifice or a slot configured for receiving the corresponding third element 27 which is for example a screw, possibly with mounting ring(s).

Here, the support 23 presents two attaching portions 25, the strain gauges 21 being located between the two attaching portions 25 according to a longitudinal direction 29 of the support 23.

Each first element 17 extends according to a main direction 31 that is configured to be transversal to the reference plane 13 when installed, the part 11 of the car door 5 and the support 23 presenting each a through opening for the passage of the first element 17.

Both openings are aligned so that the first element 17 is able to pass though. The first element 17 comprises a head 33 configured to cooperate with the internal surface of the part 11 of the car door 5 opposed to the external side 9.

The opening of the support 23 is located between the two strain gauges 21 according to the longitudinal direction 29 of the support 23. Here, the first element 17 is a screw.

A screw is an efficient way to secure the support 23 on the external side 9 or on an intermediate part mounted on the external side 9.

The second element 19 presents a form complementary with a recess 35 in the handle 3 so that there is a cooperation by complementarity of form. The complementarity of form is important as it enables the first element 17 to move together with the handle 3 when a user is pushing or pulling the handle 3.

Here, the second element 19 is a nut, said nut being configured to cooperate with the screw to secure the support 23 on the external side 9.

As illustrated in the figures, the electronic sensing unit 1 comprises two distinct sensors 7 and two corresponding fixing mechanisms 15.

A car access assembly 37 comprises the handle 3 mounted on the car door 5, the car access assembly 37 also comprising an electronic sensing unit 1 described above. The handle can include a gasket 38 to be inserted between said handle 3 and the external side 9.

The car access assembly 37 also comprises the car door 5. There is also a car comprising at least one car access assembly 37 as described above.

The car access assembly comprises an additional fixing element 39 for fixing the handle 3 on the part 11 of the car. Preferably, the additional fixing element 39 is a screw configured to be cooperating with the handle 3 and with the part 11 of the car, said screw presenting an axis deviating from the main direction 31 transversally to the reference plane 13.

In particular, said deviation is 45° more or less 10° as in figure 1 or 90° more and less 10° as in figure 2.

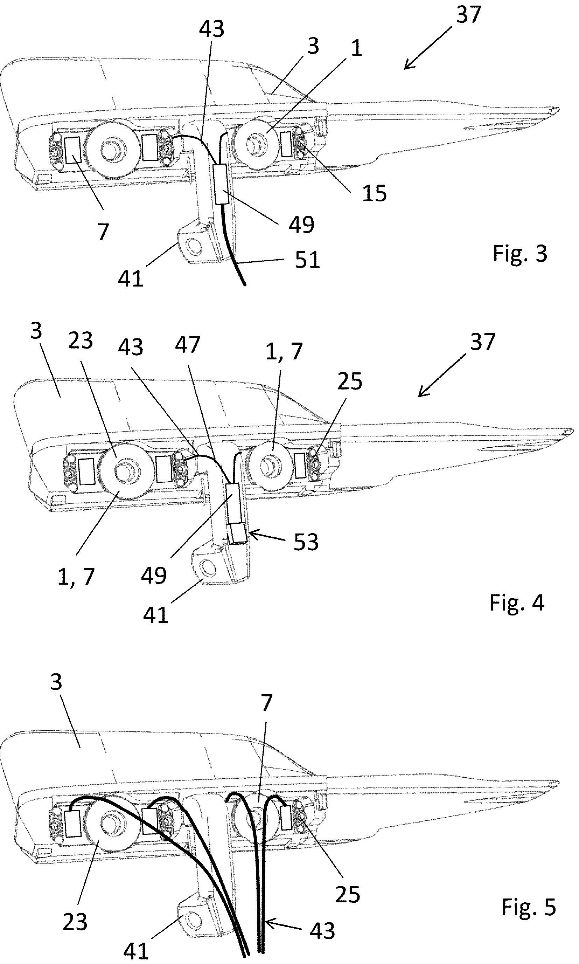

As illustrated on figures 3 to 5, the handle 3 comprises a guiding leg 41 extending farther than the internal face of the part 11 of the car, the guiding leg 41 being configured for guiding a signal transmitting device 43 connected the sensors 7.

The guiding leg 41 serves as a protection means for the signal transmitting device 43 connected to the sensors 7. The part 11 of the car presents a notch 45 in figure 2 for the passage of the guiding leg 41 from the external side 9 to a location farther than the internal surface of the part 11 of the car.

The guiding leg 41 presents channels 47 for the signal transmitting device 43 guiding.

The signal transmitting device 43 comprises electrical wires in the variant of figure 5 or flexible printed circuit boards configured to transmit a signal from the sensors 7 as in figures 3 and 4. Wires can be shielded or not.

The car access system 1 may also comprises an electronic control unit 49 as in figures 3 and 4 variants, said electronic control unit 49 comprising a connector configured to cooperate with the signal transmitting device 43, the guiding leg 41 presenting a housing for receiving said electronic control unit 49.

The electronic control unit 49 comprises a rigid printed circuit box configured to track the measures from the sensors 7. The electronic control unit 49 may comprise an outlet cable 51 as in figure 3 to be connected to the car information management system.

Alternatively, the electronic control unit 49 can comprise an outlet connector 53 as in figure 4 variant, which is accessible from the outside of the housing of electronic control unit 49.

The electronic control unit 49 may comprise a housing realized by potting for protecting the inner components. The outlet connector 53 can be outside of the potting.

As goes without saying, the invention is not limited to the sole embodiment described above by way of example, it encompasses all the variants.

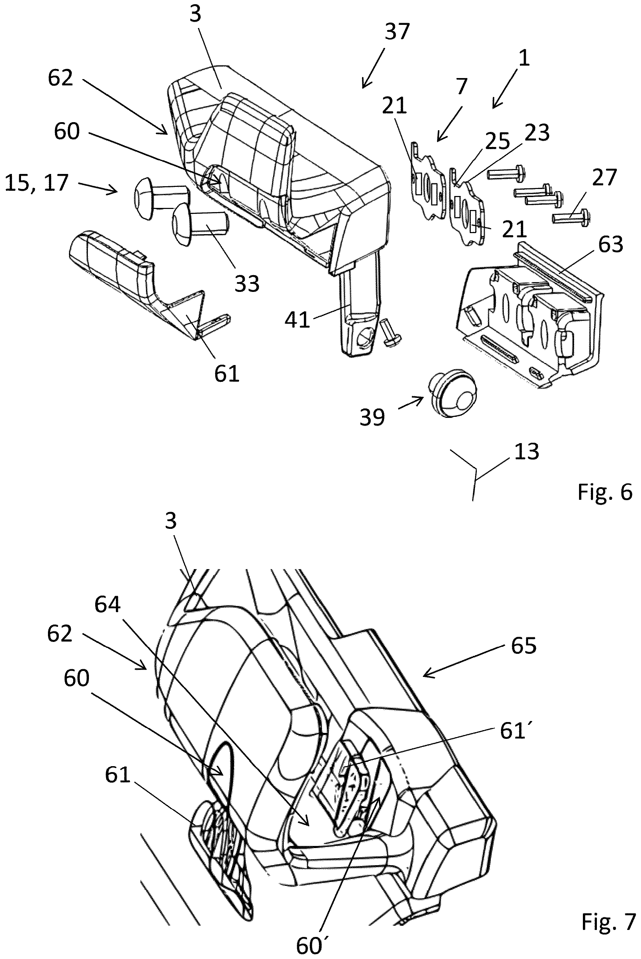

Figures 6 and 7 shows another variant of the handle 3, in which the handle 3 is attached from the external side 9.

For this purpose, through holes 60 are arranged in the handle 3 so that the handle 3 can be fixed from the external side 9 of the car door 5. The through holes 60 are closed by a cover 61 after the handle 3 has been fixed. Preferably, the cover 61 covers all through holes 60 in the handle 3 which are present for fixing the handle 3 to the car door 5. The cover 61 is fitted on the handle 3 from an external side 62 thereof, the external side 62 of the handle 3 referring to the side of the handle 3 facing away from the car door 5. As a result, the fixing mechanisms 15 are not visible. The access assembly 37 comprises a gasket body 63, the gasket body 63 being mounted on the external side 9 of the car door 5 and in particular being fixedly connected to the car door 5. The gasket body 63 can hold the second elements 19 for fixing the handle 3, as well as the holder 23 with the sensors 7, the second element 19 having a shape complementary to a recess 35 in the gasket body 63.

Referring to Figure 7, the handle 3 may also have a clearance 64 through which a hand of a person may pass. In order to allow fastening of this handle 3 from the external side 9 of the car door 5, the handle 3 has at least two through holes or recesses 60, 60' which are arranged in alignment one behind the other. These through holes 60, 60' are each covered by a cover 61, 61'. The first cover 61 as well as the first through hole 60 are arranged at the external side 62 of the handle 3, and the second cover 61' as well as the second through hole 60' are arranged between the external side 62 of the handle 3 and the car door 5. This allows a simple assembly to be performed by inserting an assembly tool through the first through hole 60 and second through hole 60'. After the handle 3 is fixed, the two covers 61, 61' are mounted, which cover the through holes 60, 60' and allow an aesthetic appearance.

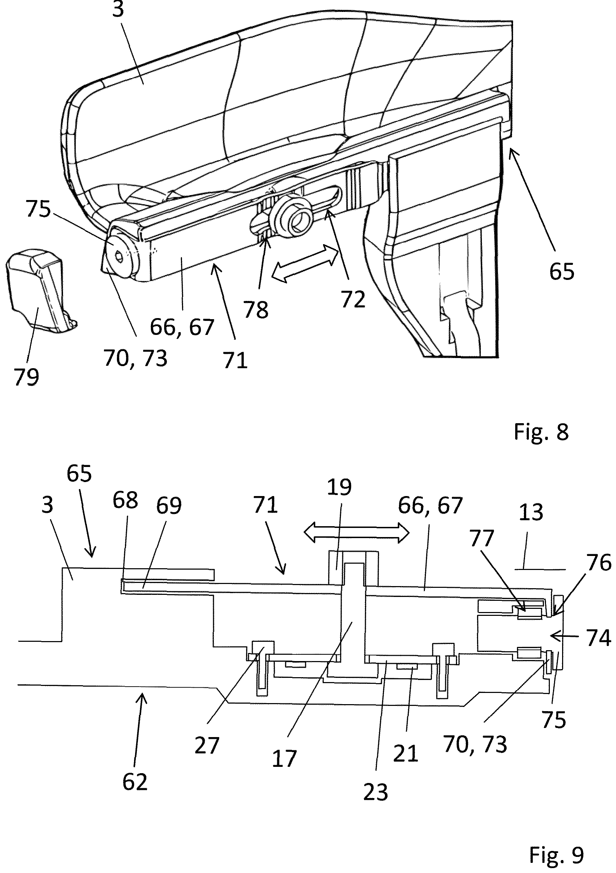

Figures 8 and 9 shows another variation of the handle 3. Figure 8 shows the inner side 65 of the handle 3, where the inner side 65 refers to the side of the handle 3 facing the car door 5. Here, the handle 3 has a mounting aid 66, which preferably consists of an elongated plate 67, which is connected to the handle 3. In particular, the handle 3 has a slot 68 on one side, into which a first end 69 of the plate 67 is inserted. The slot 68 is thereby configured in such a way that the plate 67 is fixed in its position and can be displaced in the longitudinal direction of the handle 3, in particular it can be displaced in the direction of the reference plane 13. The second end 70 of the plate 67 is connected, in particular screwed, to the handle 3. In particular, the plate 67 can be angled on one side. The plate 67 has an elongated hole 72 in the elongated region 71 and a recess or bore 74 in the angled region 73. Due to the sheet 67, the handle 3 can be displaced in the longitudinal direction, in particular in the direction of the reference plane 13, in order to compensate tolerances. The recess 74 at the angled region 73 of the plate 67 serves to fix the plate 67 to the screw 75, which is screwed into the handle 3. For this purpose, the screw 75 can have a circumferential gap 76, in which, in the area of the recess 74, the plate 67 is fixed. If the screw 75 is unscrewed or screwed in, the position of the handle 3 is adjusted in the longitudinal direction. Preferably, a tolerance compensation element 77 is arranged in the handle 3 for this purpose, into which the screw 75 is screwed.

In order to mount the handle 3, a through hole or recess is arranged in the car door 5, through which the first element 17, in particular a screw, is inserted. This fixes the position of the first element 17 to the car door 5. To move the handle 3 in the longitudinal direction, the handle 3 is mounted on the car door 5 and the first element 17 is pre-fixed. Then, the handle 3 can be moved in the longitudinal direction until it is exactly aligned, by screwing in or unscrewing the screw 75. Subsequently, the first element 17 is screwed tight so that the handle 3 is fixed. Preferably, the plate 67 has a fluting 78 in the area of the elongated hole 72, so that slipping or loosening of the handle 3 is impossible. After the handle 3 has been mounted, it can be advantageous if a side cover 79 is attached to the handle 3 in order to cover the angled area 73 of the plate 67.

## Claims

1. Car access assembly (37) comprising a car door (5), a handle (3) mounted on the car door (5), the car access assembly (37) also comprising an electronic sensing unit (1) for the handle (3) attached on the car door (5), the electronic sensing unit (1) comprising:
- a sensor (7) attached on an external side (9) of a part (11) of the car door (5) extending according to a reference plane (13),
- a fixing mechanism (15) for the sensor (7), the fixing mechanism (15) comprising a first element (17) and a second element (19) configured to cooperate together; the first element (17) being also configured to cooperate with the part (11) of the car door (5) and the sensor (7) or with the handle (3); the second element (19) being also configured to cooperate with the handle (3) or with the part (11) of the car door (5) and the sensor (7) so that a constraint applied to the handle (3) is transmitted to the sensor (7) for detection of a command,
wherein the handle (3) comprises a guiding leg (41) extending farther than the internal face of the part (11) of the car door (5), the guiding leg (41) being configured for guiding a signal transmitting device (43) of the electronic sensing unit (1) connected the sensor (7).

2. Car access assembly (37) according to claim 1, wherein the sensor (7) includes at least one strain gauge (21), said at least one strain gauge (21) being configured to be deformed when the constraint is applied to the handle (3).

3. Car access assembly (37) according to claim 2, wherein the sensor (7) comprises a support (23) on which the at least one strain gauge (21) is attached, the support (23) being configured to be attached on the external side (9) or on an intermediate part mounted on the external side (9), the support (23) extending parallel to the reference plane (13).

4. Car access assembly (37) according to claim 3, wherein the first element (17) extends according to a main direction (31) that is configured to be transversal to the reference plane (13) when installed, the part (11) of the car door (5) and the support (23) presenting each a through opening for the passage of the first element (17).

5. Car access assembly (37) according to claim 4, wherein the first element (17) is a screw.

6. Car access assembly (37) according to one of the claims 1 to 5, wherein the second element (19) presents a form complementary with a recess (35) in the handle (3) or a recess (35) in a gasket body (63) so that there is a cooperation by complementarity of form.

7. Car access assembly (37) according to claim 6, wherein the second element (19) is a nut.

8. Car access assembly (37) according to one of the claims 1 to 7, wherein the electronic sensing unit (1) comprises two distinct sensors (7) and two corresponding fixing mechanisms (15).

9. Car access assembly (37) according to one of the claims 1 to 8, wherein the signal transmitting device (43) comprises electrical wire(s) or flexible printed circuit board(s) configured to transmit a signal from the sensor (7).

10. Car access system (37) according to one of the claims 1 to 9, also comprising an electronic control unit (49), said electronic control unit (49) comprising a connector configured to cooperate with the signal transmitting device (43), the guiding leg (41) presenting a housing for receiving said electronic control unit (49).

## Patentansprüche

1. Autozugangsbaugruppe (37), die eine Autotür (5) und einen an der Autotür (5) montierten Griff (3) umfasst, wobei die Autozugangsbaugruppe (37) auch eine elektronische Sensoreinheit (1) für den an der Autotür (5) angebrachten Griff (3) umfasst, wobei die elektronische Sensoreinheit (1) Folgendes umfasst:
- einen Sensor (7), der an einer Außenseite (9) eines sich gemäß einer Bezugsebene (13) erstreckenden Teils (11) der Autotür (5) angebracht ist,
- einen Befestigungsmechanismus (15) für den Sensor (7), wobei der Befestigungsmechanismus (15) ein erstes Element (17) und ein zweites Element (19) umfasst, die so eingerichtet sind, dass sie zusammenarbeiten; wobei das erste Element (17) auch so eingerichtet ist, dass es mit dem Teil (11) der Autotür (5) und dem Sensor (7) oder mit dem Griff (3) zusammenarbeitet; wobei das zweite Element (19) auch so eingerichtet ist, dass es mit dem Griff (3) oder mit dem Teil (11) der Autotür (5) und dem Sensor (7) zusammenarbeitet, so dass eine auf den Griff (3) angewendete Bedingung an den Sensor (7) zum Erkennen eines Befehls übertragen wird,
wobei der Griff (3) einen Führungsschenkel (41) umfasst, der sich weiter als die Innenfläche des Teils (11) der Autotür (5) erstreckt, wobei der Führungsschenkel (41) so eingerichtet ist, dass er eine Signalübertragungsvorrichtung (43) der mit dem Sensor (7) verbundenen elektronischen Sensoreinheit (1) führt.

2. Autozugangsbaugruppe (37) nach Anspruch 1, wobei der Sensor (7) mindestens einen Dehnungsmessstreifen (21) enthält, wobei mindestens ein Dehnungsmessstreifen (21) so eingerichtet ist, dass er sich verformt, wenn die Bedingung auf den Griff (3) angewendet wird.

3. Fahrzeugzugangsbaugruppe (37) nach Anspruch 2, wobei der Sensor (7) einen Träger (23) umfasst, auf dem der mindestens eine Dehnungsmessstreifen (21) angebracht ist, wobei der Träger (23) so eingerichtet ist, dass er an der Außenseite (9) oder an einem an der Außenseite (9) montierten Zwischenteil angebracht ist, wobei sich der Träger (23) parallel zur Bezugsebene (13) erstreckt.

4. Fahrzeugzugangsbaugruppe (37) nach Anspruch 3, wobei sich das erste Element (17) in einer Hauptrichtung (31) erstreckt, die so eingerichtet ist, dass sie im eingebauten Zustand quer zur Bezugsebene (13) verläuft, wobei der Teil (11) der Autotür (5) und der Träger (23) jeweils eine Durchgangsöffnung für den Durchgang des ersten Elements (17) aufweisen.

5. Autozugangsbaugruppe (37) nach Anspruch 4, wobei das erste Element (17) eine Schraube ist.

6. Autozugangsbaugruppe (37) nach einem der Ansprüche 1 bis 5, wobei das zweite Element (19) eine Form aufweist, die mit einer Aussparung (35) im Griff (3) oder einer Aussparung (35) in einem Dichtungskörper (63) komplementär ist, so dass eine Zusammenarbeit durch Formkomplementarität besteht.

7. Autozugangsbaugruppe (37) nach Anspruch 6, wobei das zweite Element (19) eine Mutter ist.

8. Autozugangsbaugruppe (37) nach einem der Ansprüche 1 bis 7, wobei die elektronische Sensoreinheit (1) zwei unterschiedliche Sensoren (7) und zwei entsprechende Befestigungsmechanismen (15) umfasst.

9. Autozugangsbaugruppe (37) nach einem der Ansprüche 1 bis 8, wobei die Signalübertragungsvorrichtung (43) einen oder mehrere elektrische Drähte oder einer oder mehrere flexible Leiterplatten umfasst, die so eingerichtet sind, dass sie ein Signal vom Sensor (7) übertragen.

10. Autozugangssystem (37) nach einem der Ansprüche 1 bis 9, das auch eine elektronische Steuereinheit (49) umfasst, wobei die elektronische Steuereinheit (49) einen Anschluss umfasst, der so eingerichtet ist, dass er mit der Signalübertragungsvorrichtung (43) zusammenarbeitet, wobei der Führungsschenkel (41) ein Gehäuse zum Aufnehmen der elektronischen Steuereinheit (49) aufweist.

## Revendications

1. Ensemble d'accès à une voiture (37) comprenant une portière de voiture (5), une poignée (3) montée sur la portière de voiture (5), l'ensemble d'accès à une voiture (37) comprenant également une unité de détection électronique (1) pour la poignée (3) fixée sur la portière de voiture (5), l'unité de détection électronique (1) comprenant :
- un capteur (7) fixé sur un côté externe (9) d'une partie (11) de la portière de voiture (5) s'étendant selon un plan de référence (13),
- un mécanisme de fixation (15) pour le capteur (7), le mécanisme de fixation (15) comprenant un premier élément (17) et un deuxième élément (19) configurés pour coopérer ensemble ; le premier élément (17) étant également configuré pour coopérer avec la partie (11) de la portière de voiture (5) et le capteur (7) ou avec la poignée (3) ; le deuxième élément (19) étant également configuré pour coopérer avec la poignée (3) ou avec la partie (11) de la portière de voiture (5) et le capteur (7) de sorte qu'une contrainte appliquée à la poignée (3) soit transmise au capteur (7) pour la détection d'une instruction,
dans lequel la poignée (3) comprend une patte de guidage (41) s'étendant plus loin que la face interne de la partie (11) de la portière de voiture (5), la patte de guidage (41) étant configurée pour guider un dispositif de transmission de signal (43) de l'unité de détection électronique (1) relié au capteur (7).

2. Ensemble d'accès à une voiture (37) selon la revendication 1, dans lequel le capteur (7) comprend au moins une jauge de contrainte (21), ladite au moins une jauge de contrainte (21) étant configurée pour être déformée lorsque la contrainte est appliquée à la poignée (3).

3. Ensemble d'accès à une voiture (37) selon la revendication 2, dans lequel le capteur (7) comprend un support (23) sur lequel est fixée l'au moins une jauge de contrainte (21), le support (23) étant configuré pour être fixé sur le côté externe (9) ou sur une partie intermédiaire montée sur le côté externe (9), le support (23) s'étendant parallèlement au plan de référence (13).

4. Ensemble d'accès à une voiture (37) selon la revendication 3, dans lequel le premier élément (17) s'étend selon une direction principale (31) qui est configurée pour être transversale au plan de référence (13) lors de son installation, la partie (11) de la portière de voiture (5) et le support (23) présentant chacun une ouverture traversante pour le passage du premier élément (17).

5. Ensemble d'accès à une voiture (37) selon la revendication 4, dans lequel le premier élément (17) est une vis.

6. Ensemble d'accès à une voiture (37) selon l'une des revendications 1 à 5, dans lequel le deuxième élément (19) présente une forme complémentaire avec un évidement (35) dans la poignée (3) ou un évidement (35) dans un corps de joint (63) de sorte qu'il existe une coopération par complémentarité de forme.

7. Ensemble d'accès à une voiture (37) selon la revendication 6, dans lequel le deuxième élément (19) est un écrou.

8. Ensemble d'accès à une voiture (37) selon l'une des revendications 1 à 7, dans lequel l'unité de détection électronique (1) comprend deux capteurs distincts (7) et deux mécanismes de fixation correspondants (15).

9. Ensemble d'accès à une voiture (37) selon l'une des revendications 1 à 8, dans lequel le dispositif de transmission de signal (43) comprend un/des fil(s) électrique(s) ou une/des carte(s) de circuit imprimé souple(s) configuré(e)(s) pour transmettre un signal du capteur (7).

10. Système d'accès à une voiture (37) selon l'une des revendications 1 à 9, comprenant également une unité de commande électronique (49), ladite unité de commande électronique (49) comprenant un connecteur configuré pour coopérer avec le dispositif de transmission de signal (43), la patte de guidage (41) présentant un boîtier pour recevoir ladite unité de commande électronique (49).
